(19) Europäisches Patentamt
European Patent Office
Office européen des brevets

(11) **EP 2 039 987 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
*F21S 10/02* *(2006.01)*   *G02B 6/00* *(2006.01)*

(21) Anmeldenummer: **08016581.4**

(22) Anmeldetag: **19.09.2008**

(54) **LED-Lichtleiter zum Durchmischen von Licht mehrerer LEDs**

LED optical fibre for mixing the light of several LEDs

Conducteur lumineux DEL destinés au mélange de la lumière de plusieurs DEL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.09.2007 DE 102007044894**

(43) Veröffentlichungstag der Anmeldung:
**25.03.2009 Patentblatt 2009/13**

(73) Patentinhaber: **Siteco Beleuchtungstechnik GmbH**
**83301 Traunreut (DE)**

(72) Erfinder: **Lukanow, Stephan**
**83377 Vachendorf (DE)**

(74) Vertreter: **Schohe, Stefan**
**Forrester & Boehmert**
**Pettenkoferstrasse 20-22**
**80336 München (DE)**

(56) Entgegenhaltungen:
**EP-A- 1 693 615    WO-A-2007/016282**

**Beschreibung**

Die Erfindung betrifft einen LED-Lichtleiter zum Durchmischen von Licht mehrerer LEDs (lichtemittierende Dioden), insbesondere zum Durchmischen von Licht von LEDs unterschiedlicher Farbe, um beispielsweise weißes Licht zu erzeugen.

Aus dem Stand der Technik sind mehrere Vorrichtungen bekannt, um Licht aus verschiedenfarbigen LEDs zu Durchmischen. Beispielsweise offenbart die Druckschrift WO 01/23804 eine Vorrichtung mit einer ersten und zweiten LED-Lichtquelle, die jeweils ein kollimiertes Lichtstrahlenbündel aus unterschiedlichen Richtungen auf einer Anordnung einer facettierten Oberfläche einstrahlen. An der Oberfläche wird das Licht entweder reflektiert oder transmittiert, so daß die aus unterschiedlichen Richtungen eintreffenden Lichtstrahlen die Oberfläche parallel verlassen. In dem austretenden Lichtbündel sind die mehreren Farben überlagert.

Ferner offenbart die Druckschrift WO 00/58664 eine Lichtquelle mit einer Anordnung von mehreren LEDs unterschiedlicher Farbe, die in einer Lichteintrittsseite eines röhrenförmigen, sich aufweitenden Reflektors angeordnet sind. Der Querschnitt des röhrenförmigen Reflektors entlang einer optischen Achse weicht von einer kreisrunden Form ab, um durch Reflexion der Lichtstrahlen an den Seitenwänden eine Durchmischung des Lichts herbeizuführen.

WO2007/016282 offenbart einen Lichtleiter, insbesondere einen Lichtleiter mit einer in Längsrichtung des Lichtleiters geriffelten Oberfläche, die für eine Durchmischung von Licht, welches aus mehreren LEDs an einer Seite des Lichtleiters eintreten kann, sorgen soll. Die Riffelungen können verschiedene Formen haben, wobei insbesondere V-Form und U-Form offenbart sind. Die Scheitelwinkel der V-förmigen Vertiefungen können unterschiedlich ausgebildet sein.

EP 1 693 615 A1 offenbart eine Beleuchtungseinrichtung, welche einen Hohllichtleiter vorsieht, in dem ein transparenter massiver Körper zum Durchmischen von Licht eingefügt ist. Die Durchmischung erfolgt aufgrund einer rauen Oberfläche, die entweder quer zur Längserstreckung des Lichtleiters oder entlang der Seitenwände des Lichtleiters angeordnet ist.

Ein Nachteil des Stands der Technik ist jedoch, daß das Licht nur unzureichend durchmischt wird. Es ist die Aufgabe der vorliegenden Erfindung, eine Vorrichtung bereitzustellen, welche einen höheren Grad der Durchmischung von Licht mehrerer LEDs ermöglicht.

Die vorliegende Erfindung sieht einen LED-Lichtleiter zum Durchmischen von Licht mehrerer LEDs vor, die einen Lichtleiter mit einer Lichteintrittsseite und einer von der Lichteintrittsseite beabstandeten Lichtaustrittsseite und mehreren an der Lichteintrittsseite angeordneten LEDs aufweist, wobei der Umfang der Lichteintrittsseite und der Umfang der Lichtaustrittsseite durch Grenzflächen des Lichtleiters verbunden sind, welche eine Basislinie des Lichtleiters mantelförmig umschließen, die die Längserstreckung des Lichtleiters zwischen der Lichteintrittsseite und der Lichtaustrittsseite definiert, wobei die Grenzflächen auf der zur Basislinie weisenden Seite lichtreflektierende Strukturen aufweisen, an denen Licht der LEDs auf dem Weg von der Lichteintrittsseite zu der Lichtaustrittsseite mehrfach reflektiert wird und die lichtreflektierenden Strukturen auf der zur Basislinie weisenden Seite eine Abfolge von Erhebungen definieren.

Die Hauptpropagationsrichtung des LED-Lichts erfolgt in dem Lichtleiter entlang der Basislinie durch mehrfache Reflexion an den zur Basislinie weisenden Grenzflächen des Lichtleiters. Die Erfindung beruht auf der Beobachtung, daß durch Erhebungen an den Grenzflächen die Durchmischung des Lichts signifikant erhöht werden kann, so daß selbst bei einem verhältnismäßig kurzen Lichtleiter (Länge der Basislinie zwischen der Lichteintrittsseite und der Lichtaustrittsseite) bereits eine vollständige Durchmischung des Lichts eintritt. Der Effekt der Durchmischung wird einerseits durch die mehrfache Reflexion und andererseits durch die unterschiedlichen Lichtablenkungen an den Erhebungen längs der reflektierenden Lichtleitergrenzflächen hervorgerufen. Durch eine oder mehrere Vertiefungen längs der Lichtleitergrenzflächen, wie sie z.B. zwischen zwei Erhebungen entsteht, wird auch der Effekt der Durchmischung des Lichts erzielt. Daher kann eine Erhebung auch durch eine Vertiefung ersetzt werden.

Gemäß einer bevorzugten Ausführungsform erstrecken sich die Erhebungen von dem Umfang der Lichteintrittsseite durchgängig zu dem Umfang der Lichtaustrittsseite. Gemäß dieser Ausführungsform wird der Propagationsweg des Lichts von der Lichteintrittsseite zu der Lichtaustrittsseite vollständig zur Durchmischung des Lichts ausgenutzt.

Gemäß einer Ausführungsform der Erfindung weisen die Erhebungen jeweils einen konstanten Querschnitt in der Ebene senkrecht zu der Basislinie auf. Gemäß einer weiter bevorzugten Ausführungsform ist der gesamte Lichtleiter, d.h. einschließlich aller Erhebungen, mit einem konstanten Querschnitt in den Ebenen senkrecht zu der Basislinie ausgeführt. Diese Lichtleiter können beispielsweise in einem Extrusionsverfahren besonders kostengünstig hergestellt werden, weil sie eine Translationssymmetrie bezüglich der Basislinie aufweisen. Dennoch bleibt der hohe Grad von Lichtdurchmischung trotz des verhältnismäßig einfachen Aufbaus erhalten, weil sich die Erhebungen auf der Innenseite der Grenzflächen des Lichtleiters vollständig über die Länge des Lichtleiters erstrecken.

Gemäß einer bevorzugten Ausführungsform sind die Erhebungen in dem Querschnitt senkrecht zur Basislinie U-förmig oder gemäß einer besonders bevorzugten Ausführungsform V-förmig ausgebildet. Die U-Form und insbesondere die V-Form gewährleisten eine hohe Durchmischung, weil sich einander gegenüberliegende Facetten an den lichtreflektierenden Strukturen definiert sind, an denen eine Mehrfachreflexion der Lichtstrahlung besonders begünstigt wird.

Gemäß einer Ausführungsform der Erfindung sind die mehreren LEDs an der Lichteintrittsseite in einer Reihe nebeneinander oder in Form einer quadratischen oder rechteckförmigen (oder allgemein parallelogrammförmigen) Matrix angeordnet, und der Lichtleiter definiert eine Bodenseite und eine Dachseite, die sich im wesentlichen parallel zu der LED-Reihe bzw. parallel zu zwei Seiten der LED-Matrix erstrecken. Insbesondere kann eine Reihe von drei LEDs, beispielsweise mit den Farben rot, grün und blau, nebeneinander vorgesehen sein. Bei der Verwendung einer Matrix-Anordnung von LEDs können die Farben der LEDs innerhalb einer Reihe und/oder innerhalb einer Spalte der Matrix wechseln. Durch Mehrfachreflexion an der Bodenseite und der Dachseite des Lichtleiters parallel zu der Reihe bzw. der Matrixlängserstreckung findet die Durchmischung statt. Diese wäre jedoch nur unzureichend, wenn der Lichtleiter im Querschnitt die Form eines einfachen Rechtecks aufweist. In Kombination mit den Erhebungen auf den Innenseiten des Lichtleiters, insbesondere an der Boden- und an der Dachseite, wird die Durchmischung erheblich begünstigt.

Gemäß einer besonders bevorzugten Ausführungsform ist eine Erhebung oder ein ganzzahliges Vielfaches von Erhebungen an der Bodenseite und/oder an der Dachseite des Lichtleiters jeder LED in der LED-Reihe oder an der längeren Seite der rechteckförmigen LED-Matrix räumlich zugeordnet. Da die Erhebungen für eine Reflexion der Lichtstrahlen teilweise quer zu der Basislinie sorgen, werden die Anteile des Lichts der nebeneinanderliegenden LEDs bis zum Erreichen der Lichtaustrittsseite des Lichtleiters durchmischt. Insbesondere kann das optische Zentrum jeder LED jeweils auf einer gedachten Verbindungslinie zwischen den Scheitel zweier Erhebungen an der Lichteintrittsseite angeordnet sein. Bei zwei Erhebungen je LED an der Dachseite und der Bodenseite kann die jeweilige LED auch auf einer gedachten Verbindungslinie angeordnet sein, die sich von einer Schnittlinie zwischen zwei Erhebungen an der Dachseite zu einer Schnittlinie zwischen zwei Erhebungen an der Bodenseite erstreckt. Bevorzugt sind Dachseite und Bodenseite spiegelsymmetrisch bezüglich einer Schnittfläche durch den Lichtleiter oder durch wenigstens einen Teil des Lichtleiters ausgebildet, wobei die Schnittfläche die Basislinie enthält.

Andere Anordnungen von LEDs in der Lichteintrittsseite und andere Grundformen des Lichtleiters im Querschnitt senkrecht zur Basislinie sind im Rahmen der Erfindung möglich. Beispielsweise kann eine kreisförmige (ggf. mehrere konzentrische Kreise) oder sternförmige Anordnung von LEDs vorgesehen sein und der Lichtleiter besitzt einen im wesentlichen kreisförmigen Querschnitt mit angeordneten Erhebungen, die radial in das Kreisinnere weisen.

Gemäß einer bevorzugten Ausführungsform weisen eine oder mehrere der Erhebungen einen Scheitelpunkt auf, der am Umfang der Lichteintrittsseite in Richtung zu jeweils einer LED weist. Die Flanken zu beiden Seiten des Scheitels sorgen bei dieser Ausführungsform für eine Reflexion, die wenigstens zum Teil in Richtung zu der benachbarten LED gerichtet ist.

Gemäß einer bevorzugten Ausführungsform wird eine oder werden mehrere der Erhebungen aus jeweils zwei ebenen Flanken gebildet, die in einem Scheitelpunkt der Erhebung und/oder zwischen zwei benachbarten Erhebungen einen Winkel im Bereich zwischen 90° und 165°, bevorzugt zwischen 110° und 160°, insbesondere einen Winkel von etwa 120° einschließen.

Gemäß einer Ausführungsform wird der Lichtleiter von einem Hohllichtleiter gebildet. Dabei werden die Grenzflächen durch die nach innen weisenden Seiten der Wände des Hohllichtleiters gebildet. Gemäß einer alternativen Ausführungsform kann der Lichtleiter auch aus einem Vollichtleiter gebildet sein. In diesem Fall sind die Grenzflächen des Vollichtleiters, welche die Basislinie mantelförmig umschließen, so ausgebildet, daß die nach innen weisende Seite die erfindungsgemäßen Erhebungen definieren. Dies entspricht Vertiefungen an der Außenseite des Vollichtleiters. Bei dem Vollichtleiter kann die Reflexion an den Grenzflächen durch Totalreflexion erfolgen. Alternativ kann die Außenseite des Vollichtleiters auch mit einer reflektierenden Schicht versehen sein, um eine Reflexion an den nach innen weisenden Grenzflächen zu gewährleisten.

Gemäß einer Ausführungsform ist der Hohllichtleiter aus Kunststoff (z.B: PMMA, PU, PBT oder PC) oder aus Metall gebildet. Insbesondere sind die Innenseiten des Hohllichtleiters mit einer reflektierenden Schicht versehen, beispielsweise mit einer hochreflektierenden Verspiegelung. Es kann auch eine diffus reflektierende Schicht vorgesehen sein, wodurch die Lichtdurchmischung ebenfalls begünstigt wird. Insbesondere kann der Hohllichtleiter auch aus einer Spiegelfolie gebildet sein, z.B. aus einer als "visible mirror" bekannten Folie, die auf der Außenseite zur mechanischen Stabilisierung mit Kunststoff beschichtet ist.

Gemäß einer bevorzugten Ausführungsform weist der Lichtleiter eine Länge von wenigstens

$$l = 3 \ b \ \tan(90°\text{-}\varphi/2)$$

oder bevorzugt

$$l = 4 \ b \ \tan(90°\text{-}\varphi/2)$$

auf, wobei 1 die Länge des Lichtleiters entlang der Basislinie ist, b die Breite des Lichtleiters ist, und φ der Öffnungswinkel der Lichtstärkeverteilung der LED zwischen den Werten der Hälfte der maximalen Lichtstärke ist, wie er z.B. im Datenblatt der Hersteller der LEDs angegeben wird. Diese Länge ist als Propagationsweg für das Licht bereits ausreichend, um eine gute Durchmischung des Lichts durch Mehrfachreflexion in den Erhebungen zu gewährleisten.

Gemäß einer Ausführungsform verläuft die Basislinie des Lichtleiters teilweise oder vollständig gradlinig. Alternativ kann die Basislinie in Teilbereichen des Lichtleiters auch gekrümmt verlaufen, insbesondere in einer 90°-Biegung oder einer 180°-Biegung. Der Lichtleiter kann beispielsweise aus Modulen zusammengesetzt sein, wobei jedes Modul einen Teil der Basislinie umfaßt, die sich beispielsweise gradlinig oder in besagter 90°-Biegung oder 180°-Biegung erstreckt. Weitere bevorzugte Krümmungen umfassen 30°-, 60°-, 120°- und 150°-Biegungen. Je nach Anwendungszweck und räumlichen Gegebenheiten der Leuchte kann aus den Modulen eine gewünschte Form zusammengesetzt werden. Die Module lassen sich beispielsweise durch Steck- oder Rastverbindungen aneinander befestigen. Besonders bevorzugt ist diese Ausführungsform für Hohllichtleiter, weil die Grenzflächen zwischen den Modulen keine Nachteile für die Propagation des Lichts hervorbringen. Bei Verwendung eines Vollichtleiters sind die Grenzflächen zwischen den Modulen derart ausgebildet, daß kein oder nur ein sehr geringer Luftspalt zwischen Modulen entsteht, welcher die Propagation des Lichts behindern könnte. Beispielsweise kann zwischen den Modulen ein Klebstoff vorgesehen sein, dessen Brechungsindex etwa dem Brechungsindex des Lichtleitermaterials entspricht.

Weitere Merkmale und Vorteile der Erfindung werden aus nachfolgender Beschreibung mehrerer bevorzugter Ausführungsformen der Erfindung deutlich. In den Figuren ist folgendes dargestellt:

Figur 1  zeigt eine Aufsicht auf eine erste Ausführungsform eines LED-Lichtleiters, wobei die LEDs mit gestrichelten Linien dargestellt sind.

Figur 2  zeigt eine perspektivische Ansicht des LED-Lichtleiters nach Figur 1 ohne LEDs.

Figur 3  zeigt eine Schnittansicht des LED-Lichtleiters nach Figur 1 mit Maßangaben.

Figur 4  zeigt eine Schnittansicht einer weiteren Ausführungsform eines LED-Lichtleiters.

Figur 5  zeigt eine Schnittansicht einer weiteren Ausführungsform eines LED-Lichtleiters.

Figur 6  zeigt eine Aufsicht auf eine weitere Ausführungsform eines LED-Lichtleiters, wobei die LEDs durch gestrichelte Linien dargestellt sind.

Figur 7  zeigt eine perspektivische Ansicht einer weiteren Ausführungsform eines LED-Lichtleiters ohne LEDs.

Figur 8  zeigt eine perspektivische Ausführungsform einer weiteren Ausführungsform eines LED-Lichtleiters ohne LEDs.

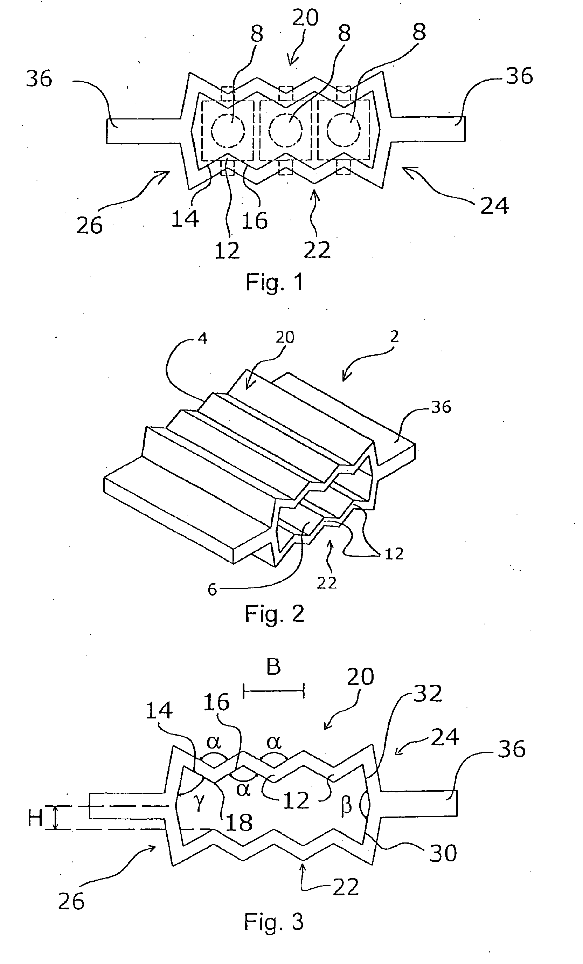

Bezugnehmend auf die Figuren 1 bis 3 wird eine erste Ausführungsform des erfindungsgemäßen LED-Lichtleiters beschrieben. Es handelt sich dabei um einen Hohllichtleiter 2, der sich translationssymmetrisch von einer Lichteintrittsseite 4 zu einer Lichtaustrittsseite 6 erstreckt.

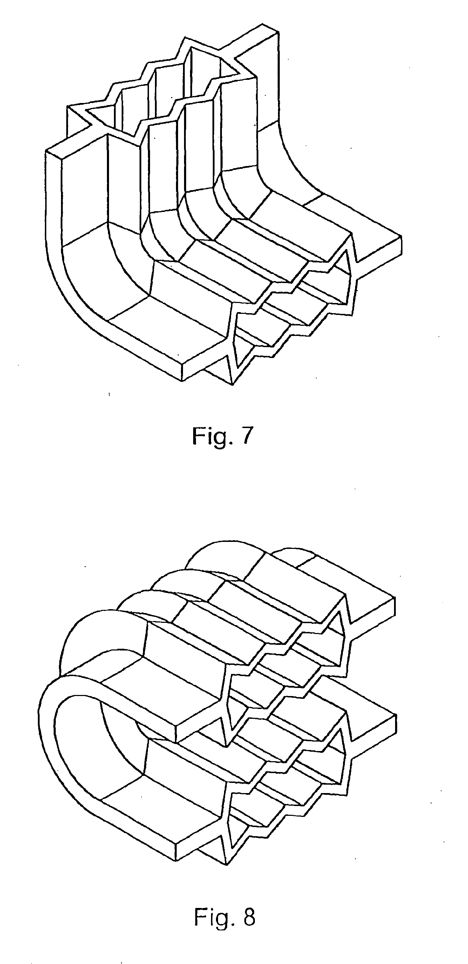

Der dargestellte Hohllichtleiter 2 erstreckt sich längs einer Graden, beispielsweise entlang einer Mittelachse, die allgemein als Basislinie bezeichnet ist. Wie im Zusammenhang mit den Figuren 7 und 8 noch erläutert wird, muß diese Basislinie jedoch nicht zwangsläufig eine Grade sein. Die Lichteintrittsseite 4 und die Lichtaustrittsseite 6 stehen senkrecht auf der Basislinie und der Querschnitt des Lichtleiters entlang aller Ebenen senkrecht zu der Basislinie ist konstant.

An der Lichteintrittsseite 4 sind nebeneinander drei LEDs 8 angeordnet. Die LEDs können von unterschiedlicher spektraler Farbe sein oder unterschiedliche Farbtemperaturen aufweisen. Beispielsweise handelt es sich um die Farben rot, grün und blau, die nach Durchmischung weißes Licht ergeben. Es können jedoch auch weiße und farbige LEDs zur Anwendung kommen, z.B. um geringe Farbunterschiede in fast gleichen LEDs durch das Durchmischen auszugleichen. Beispielsweise handelt es sich um LEDs der Serie Dragon, insbesondere Platinum Dragon, die von der Firma Osram angeboten werden. Es kann sich auch um LEDs des Typs Luxeon Rebel, erhältlich von der Firma Phillips, handeln.

Der Hohllichtleiter 2 ist aus einem Kunststoff gebildet. Die Innenseiten des Hohllichtleiters definieren Grenzflächen, an denen Licht der LEDs durch Mehrfachreflexion entlang des Hohllichtleiters geleitet wird.

Die nach innen weisenden Grenzflächen des Hohllichtleiters umfassen eine reflektierende Struktur mit mehreren V-förmigen, nebeneinander angeordneten Erhebungen 12, die für eine Richtungsänderung der reflektierten Lichtstrahlen sorgen, um eine Durchmischung des Lichts zu erreichen. Die Erhebungen 12 erstrecken sich auf der Innenseite des Lichtleiters von der Lichteintrittsseite 4 durchgängig bis zur Lichtaustrittsseite 6 jeweils entlang einer Linie parallel zur Längserstreckung (Basislinie) des Hohllichtleiters.

Jede Erhebung weist zwei Flanken 14 und 16 auf, die in einem Scheitel 18 mit einem Winkel α, der in der dargestellten Ausführungsform 120° beträgt, aufeinandertreffen. Zwischen zwei Erhebungen treffen die Flanken 14 und 16 unter dem gleichen Winkel α von 120° als Innenwinkel aufeinander (vgl. Figur 3). Zur einfachen Herstellung besitzt der Hohllichtleiter eine konstante Wandstärke, so daß sich die Winkel α der Erhebungen 12 auch auf der Außenseite des Lichtleiters ergeben, wie in Figur 3 dargestellt. Für die lichttechnische Wirkung ist jedoch nur die Form der Erhebungen 12 auf der Innenseite, d.h. auf der der Basislinie zugewandten Seite, relevant.

Jeder LED 8 ist auf zwei gegenüberliegenden Seiten des Hohllichtleiters 2, einer Dachseite 20 und einer Bodenseite 22, jeweils eine Erhebung 12 räumlich zugeordnet, wobei der Scheitel 18 der jeweiligen Erhebung 12 an dem Umfang der Lichteintrittsseite 4 auf das Zentrum der LED 8 weist. Diese Konfiguration bewirkt, daß das Licht jeder LED an beiden Flanken 14 bzw. 16 jeweils eine Richtungsänderung quer zur Lichtleiterlängserstreckung erfährt, die für die Durchmischung des Lichts sorgt.

Die Dachseite 20 und die Bodenseite 22 sind an ihren Längsseiten mit Seitenwänden 24 bzw. 26 verbunden, so daß ein in den Querschnitt der Seiten 20, 22, 24 und 26 eingeschriebenes Viereck ein Rechteck beschreibt. Das Rechteck liegt mit seiner längeren Seite parallel zu der Reihe der LEDs 8. Die Seitenwände 24 und 26 werden auf der Innenseite, d.h. auf der zur Basislinie des Hohllichtleiters gewandten Seite, auch aus zwei Flanken 30 und 32 gebildet, die mittig unter einem Winkel β von 160° aufeinandertreffen. Die Flanken der Seitenwände bilden mit der jeweils angrenzenden Flanke in der Erhebung 12 an der Dachseite 20 bzw. an der Bodenseite 22 einen Winkel γ von 70°.

Die Breite B jeder Erhebung 12 beträgt in der Querschnittsebene senkrecht zur Basislinie des Hohllichtleiters 2 zwischen 3 mm und 12 mm, bevorzugt etwa 7 mm, und die Höhe H zwischen einer horizontalen Mittelebene des Lichtleiters 2 und dem zum Inneren weisenden Scheitel 18 jeder Erhebung beträgt zwischen 1 mm und 6 mm, bevorzugt etwa 2,7 mm. Diese Größen haben sich als besonders günstig für den verwendeten LED-Typ Platinum Dragon herausgestellt. Für kleinere oder größere LEDs werden die Verhältnisse von Breite zu Höhe des Hohllichtleiters entsprechend angepaßt.

Auf der Außenseite des Hohllichtleiters ist ein Steg 36 an den beiden Schmalseiten vorgesehen, der den Hohllichtleiter nicht nur stabilisiert, sondern auch dazu benutzt werden kann, den Hohllichtleiter in einer Leuchte zu montieren. Gemäß einem bevorzugten Herstellungsverfahren werden die Hohllichtleiter aus zwei (z.B. spiegelsymmetrischen) Hälften gebildet, die entlang der Stege 36 aneinandergefügt werden.

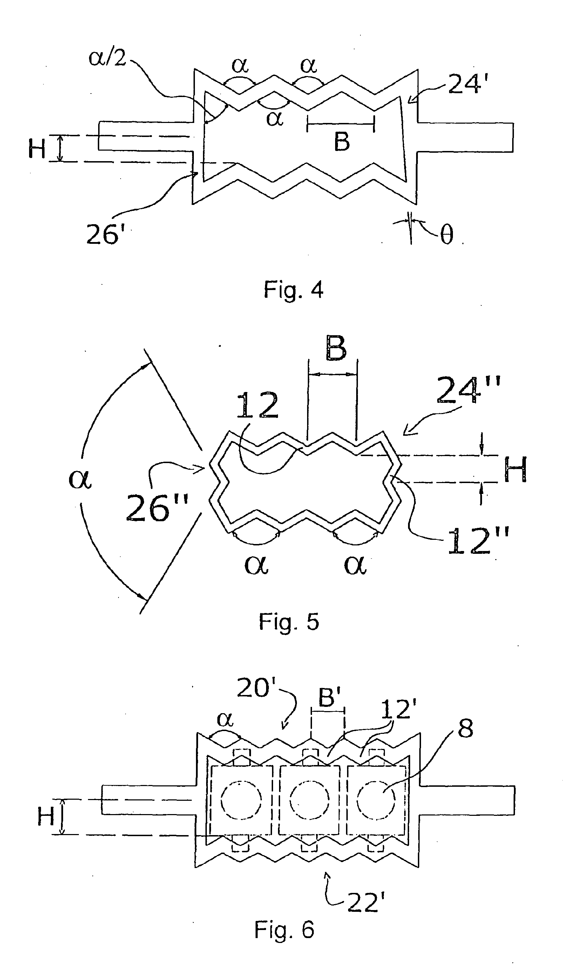

Figur 4 zeigt eine alternative Ausführungsform ähnlich zu der Ausführungsform der Figuren 1 bis 3, wobei jedoch die Seitenwände 24' und 26' auf der Innenseite eben ausgeführt sind. Die Seitenwand 26' ist senkrecht gegenüber der Mittelebene des Hohllichtleiters angeordnet, während die Innenseite in der Seitenwand 24' mit einem Winkel θ im Vergleich zu der gegenüberliegenden Seitenwand 26' geneigt ist. Der Winkel θ kann einen Wert zwischen 2° und 20°, bevorzugt etwa 10°, annehmen. Die weiteren Abmessungen entsprechen der Ausführungsform nach Figur 3.

Figur 5 zeigt eine weitere Ausführungsform, bei der die Seitenwände 24" und 26" spiegelsymmetrisch ausgebildet sind. Die Seitenwände 24" und 26" weisen im Unterschied zu den beiden vorhergehenden Ausführungsformen jeweils eine weitere V-förmige Erhebung 12" auf. Die V-Form wird durch einen Winkel α von vorzugsweise 120° gebildet. Die übrigen Abmessungen entsprechen wieder den Ausführungsformen nach Figur 3.

Bei den im Zusammenhang mit den Figuren 1 bis 5 beschriebenen Ausführungsformen ist auf der Bodenseite 22 und Deckenseite 20 jeweils eine Erhebung pro LED vorgesehen. Figur 6 zeigt hingegen eine alternative Ausführungsform, bei der jeweils zwei Erhebungen 12' an der Bodenseite 22' und an der Deckenseite 20' pro LED 8 vorgesehen sind. Vorzugsweise besitzt auch diese V-förmigen Erhebung im Scheitel einen Winkel α von 120° auf und die Breite B' beträgt die Hälfte des Abstands zweier LEDs 8 entlang der Reihe in der Lichteintrittsseite, während bei den Ausführungsformen nach den Figuren 1 bis 5 die Breite B der Erhebung etwa dem Abstand zweier benachbarter LEDs entspricht.

Die Figuren 7 und 8 zeigen weitere Ausführungsformen von Hohllichtleitern zur Verwendung in den erfindungsgemäßen LED-Lichtleitern, die eine teilweise gekrümmte Basislinie aufweisen. Die Ausführungsform nach Figur 7 weist in einem mittleren Bereich eine Basislinie auf, die eine 90°-Biegung beschreibt. Die Figur 8 besitzt einen mittleren Abschnitt des Hohllichtleiters, dessen Basislinie eine Biegung von 180° beschreibt. Die gradlinigen und die gebogenen Teilstücke des Lichtleiters sind bei diesen Ausführungsformen als separate modulare Teile ausgebildet, die durch eine Steckverbindung miteinander verbunden werden. Durch den modularen Aufbau lassen sich beliebige Formen von Lichtleitern zusammenfügen. Der Mindestradius der Krümmung beträgt etwa 5 mm. Damit kann die Lichtstrahlung der Krümmung des Lichtleiters durch Totalreflexion an den Grenzflächen folgen. Sofern die Grenzflächen hochglänzend verspiegelt sind, kann der Krümmungswinkel ggf. auch geringer sein, ohne daß ein Strahlungsverlust zu befürchten ist.

Sowohl bei den gradlinigen als auch bei den gekrümmten Lichtleitern ist es bevorzugt, daß die minimale Länge des Lichtleiters entlang der Basislinie wenigstens etwa

$$l = 4\,b\,\tan(90°\text{-}\varphi/2)$$

beträgt, wobei l die bevorzugte Minimallänge des Lichtleiters entlang der Basislinie ist, b die Breite des Lichtleiters ist, z.B. die Anzahl der LEDs mal B, und φ der Öffnungswinkel der Lichtstärkeverteilung der LED zwischen den Werten der halben Lichtstärke in der Lichtstärkeverteilung der LED ist, wie sie beispielsweise im Datenblatt des Herstellers der LED angegeben ist. Für LEDs der Serie Dragon mit einem Öffnungswinkel von φ = 120°, die in einem Lichtleiter mit der Breite b = 21 mm angeordnet sind, ergibt sich eine bevorzugte minimale Länge des Lichtleiters von 49 mm. Für die LED des Typs Rebel mit φ = 140°, die in einem Lichtleiter mit der Breite b = 9,75 mm angeordnet sind, ergibt sich eine bevorzugte minimale Länge des Lichtleiters von etwa 1= 14 mm. Bei diesen Weglängen ist eine ausreichende Durchmischung des Lichts durch die Mehrfachreflexion gewährleistet.

Weitere Ausführungsformen sind im Rahmen der Erfindung möglich. Beispielsweise kann anstelle einer Reihe von LEDs auch eine Matrix von LEDs vorgesehen sein. In diesem Fall ist die Form des Lichtleiters 2 dem Querschnitt der Matrix angepaßt.

Die dargestellten Ausführungsformen zeigen alle Hohllichtleiter 2. Im Rahmen der Erfindung ist es aber auch möglich, daß die Lichtleiter als Vollichtleiter durch ein durchgängiges transparentes Material (z.B. Glas, PMMA, PU, PBT oder PC) ausgebildet sind. Die Form der Grenzflächen des Vollichtleiters kann, wie in den vorhergehend gezeigten Ausführungsformen gewählt werden.

Bezugszeichenliste:

| | |
|---|---|
| 2 | Hohllichtleiter |
| 4 | Lichteintrittsseite |
| 6 | Lichtaustrittsseite |
| 8 | LED |
| 12, 12', 12" | Erhebung |
| 14 | Flanke der Erhebung |
| 16 | Flanke der Erhebung |
| 18 | Scheitel |
| 20, 20' | Dachseite |
| 22, 22' | Bodenseite |
| 24, 24', 24" | Seitenwand |
| 26, 26', 26" | Seitenwand |
| 30 | Flanke |
| 32 | Flanke |
| 36 | Steg |
| α, β, γ | Winkel zwischen zwei Flanken |
| B | Breite einer Erhebung |
| H | Halbe Höhe des Lichtleiters (Innenmaß) |

**Patentansprüche**

1. LED-Lichtleiter zum Durchmischen von Licht mehrerer LEDs, der einen Lichtleiter (2) mit einer Lichteintrittsseite (4) und einer von der Lichteintrittsseite beabstandeten Lichtaustrittsseite (6) und mehrere an der Lichteintrittsseite angeordneten LEDs (8) aufweist, wobei der Umfang der Lichteintrittsseite (4) und der Umfang der Lichtaustrittsseite (6) durch Grenzflächen des Lichtleiters verbunden sind, welche eine Basislinie des Lichtleiters (2) mantelförmig umschließen, die die Längserstreckung des Lichtleiters zwischen der Lichteintrittsseite (4) und der Lichtaustrittsseite (6) definiert, wobei die Grenzflächen auf der zur Basislinie weisenden Seite lichtreflektierende Strukturen aufweisen, an denen Licht der LEDs auf dem Weg von der Lichteintrittsseite zu der Lichtaustrittsseite mehrfach reflektiert wird, und die lichtreflektierenden Strukturen auf der zur Basislinie weisenden Seite eine Abfolge von Erhebungen (12, 12', 12") und/oder Vertiefungen aufweisen, **dadurch gekennzeichnet, dass** der Lichtleiter (2) eine Länge von wenigstens

$$l = 3 \ b \ \tan(90° - \varphi/2)$$

gemessen entlang der Basislinie aufweist, wobei b das Innenmaß der mittleren Breite oder der Diagonale des Lichtleiters in einem Querschnitt senkrecht zur Basislinie ist und φ der mittlere Öffnungswinkel der Lichtstärkeverteilung der LEDs zwischen den Werten der Hälfte der maximalen Lichtstärke ist.

2. LED-Lichtleiter nach Anspruch 1, wobei die Erhebungen (12, 12', 12") und/oder Vertiefungen sich von dem Umfang der Lichteintrittsseite (4) durchgängig zu dem Umfang der Lichtaustrittsseite (6) erstrekken.

3. LED-Lichtleiter nach einem der vorhergehenden Ansprüche, wobei die Erhebungen (12, 12', 12") und/oder Vertiefungen einen konstanten Querschnitt in den Ebenen senkrecht zu der Basislinie aufweisen.

4. LED-Lichtleiter nach einem der vorhergehenden Ansprüche, wobei der Lichtleiter (2) einen konstanten Querschnitt in den Ebenen senkrecht zu der Basislinie aufweist.

5. LED-Lichtleiter nach einem der vorhergehenden Ansprüche, wobei die Erhebungen (12, 12', 12") und/oder Vertiefungen in einem Querschnitt senkrecht zu der Basislinie V-förmig oder U-förmig sind.

6. LED-Lichtleiter nach einem der vorhergehenden Ansprüche, wobei die mehreren LEDs (8) an der Lichteintrittsseite (4) in einer Reihe nebeneinander oder in einer rechteckförmigen Matrix angeordnet sind und der Lichtleiter eine Bodenseite (22, 22') und eine Dachseite (20, 20') definiert, die sich im wesentlichen parallel zu der LED-Reihe oder der längeren Seite der rechteckförmigen LED-Matrix erstreckt.

7. LED-Lichtleiter nach Anspruch 6, wobei eine Erhebung (12) oder ein ganzzahliges Vielfaches von Erhebungen (12') an der Bodenseite und/oder an der Dachseite des Lichtleiters jeder LED in der LED-Reihe oder an der längeren Seite der rechteckförmigen LED-Matrix räumlich zugeordnet ist.

**8.** LED-Lichtleiter nach einem der vorhergehenden Ansprüche, wobei eine oder mehrere der Erhebungen (12, 12', 12") einen Scheitel aufweist bzw. aufweisen, der am Umfang der Lichteintrittsseite in Richtung zu jeweils einer LED weist.

**9.** LED-Lichtleiter nach einem der vorhergehenden Ansprüche, wobei eine oder mehrere der Erhebungen aus jeweils zwei ebenen Flanken (14; 16) gebildet ist bzw. sind, die in einem Scheitel der Erhebung einen Winkel zwischen 90° und 165°, bevorzugt zwischen 110° und 160°, insbesondere einen Winkel von etwa 120°, einschließen.

**10.** LED-Lichtleiter nach einem der vorhergehenden Ansprüche, wobei der Lichtleiter (2) ein Hohllichtleiter ist.

**11.** LED-Lichtleiter nach einem der vorhergehenden Ansprüche, wobei die Basislinie teilweise oder vollständig grade verläuft.

**12.** LED-Lichtleiter nach einem der vorhergehenden Ansprüche, wobei die Basislinie teilweise gekrümmt verläuft, insbesondere in einer Biegung zwischen 5° und 180°, bevorzugt mit einer 30°-, 60°-, 90°-, 120°-, 150°- oder 180°-Biegung.

**13.** LED-Lichtleiter nach einem der vorhergehenden Ansprüche, wobei der Lichtleiter aus mehreren Modulen zusammengesetzt ist und jedes Modul einen Abschnitt der Basislinie umfaßt.

**14.** LED-Lichtleiter nach Anspruch 13, wobei die Module durch eine Steck- oder Rastverbindung aneinanderfügbar sind.

**Claims**

**1.** LED light guide for blending light from several LEDs, which has a light guide (2) with a light input side (4) and a light output side (6) at a distance from the light input side and several LEDs (8) arranged on the light input side, the perimeter of the light input side (4) and the perimeter of the light output side (6) being connected by interfaces of the light guide, which enclose a baseline of the light guide (2) in the form of a sheath, which defines the longitudinal extension of the light guide between the light input side (4) and the light output side (6), wherein the interfaces have light-reflecting structures on the side pointing towards the baseline, whereon light from the LEDs on the path from the light input side to the light output side is reflected multiple times, and
the light-reflecting structures, on the side pointing towards the baseline, have a series of elevations (12, 12', 12") and/or indentations, **characterised in that** the light guide (2) has a length of at least

$$l = 3 \ b \ tan(90°-\varphi/2)$$

measured along the baseline, where b is the inside dimension of the average width or of the diagonal of the light guide in a cross section perpendicular to the baseline and $\varphi$ is the average aperture angle of the light intensity distribution of the LEDs between the values of half the maximum light intensity.

**2.** LED light guide according to claim 1, wherein the elevations (12, 12', 12") and/or indentations extend from the perimeter of the light input side (4) continuously to the perimeter of the light output side (6).

**3.** LED light guide according to one of the preceding claims, wherein the elevations (12, 12', 12") and/or indentations have a constant cross-section in the planes perpendicular to the baseline.

**4.** LED light guide according to one of the preceding claims, wherein the light guide (2) has a constant cross-section in the planes perpendicular to the baseline.

**5.** LED light guide according to one of the preceding claims, wherein the elevations (12, 12', 12") and/or indentations, in a cross-section perpendicular to the baseline, are V-shaped or U-shaped.

**6.** LED light guide according to one of the preceding claims, wherein the multiple LEDs (8) on the light input side (4) are arranged in a row side by side or in a rectangular matrix and the light guide defines a ground side (22, 22') and a roof side (20, 20'), extending essentially parallel to the LED row or the longer side of the rectangular LED matrix.

**7.** LED light guide according to claim 6, wherein an elevation (12) or an integral multiple of elevations (12') is spatially assigned to the ground side and/or to the roof side of the light guide of each LED in the LED row or to the longer side of the rectangular LED matrix.

**8.** LED light guide according to one of the preceding claims, wherein one or more of the elevations (12, 12', 12") has or have an apex, each of which points at the perimeter of the light input side in the direction of an LED.

**9.** LED light guide according to one of the preceding claims, wherein one or more of the elevations is or are formed by two planar flanks (14; 16), which in an apex of the elevation enclose an angle of between 90° and 165°, preferably between 110° and 160°, in particular an angle of about 120°.

10. LED light guide according to one of the preceding claims, wherein the light guide (2) is a hollow light guide.

11. LED light guide according to one of the preceding claims, wherein the baseline runs partially or completely straight.

12. LED light guide according to one of the preceding claims, wherein the baseline runs partially curved, in particular in a curve of between 5° and 180°, preferably with a curvature of 30°, 60°, 90°, 120°, 150° or 180°.

13. LED light guide according to one of the preceding claims, wherein the light guide is composed of several modules and each module comprises a section of the baseline.

14. LED light guide according to claim 13, wherein the modules can be joined together by means of a plug or snap connection.

**Revendications**

1. Guide de lumière de DEL pour mixer la lumière de plusieurs DEL, présentant un guide de lumière (2) avec un côté d'entrée de lumière (4) et un côté de sortie de lumière (6) espacé du côté d'entrée de lumière et plusieurs DEL (8) disposées du côté entrée de lumière, dans lequel la circonférence du côté d'entrée de lumière (4) et la circonférence du côté de sortie de lumière (6) sont reliées par des surfaces limites du guide de lumière qui entourent une ligne de base du guide de lumière (2) à la manière d'une enveloppe définissant l'étendue longitudinale du guide de lumière entre le côté d'entrée de lumière (4) et le côté de sortie de lumière (6), dans lequel les surfaces limites présentent du côté tourné vers la ligne de base des structures réfléchissant la lumière, sur lesquelles la lumière des DEL sur son trajet allant du côté d'entrée de lumière au côté de sortie de lumière est réfléchie plusieurs fois, et les structures réfléchissant la lumière présentent du côté tourné vers la ligne de base une suite de reliefs (12, 12', 12") et/ou de creux, **caractérisé en ce que** le guide de lumière (2) présente une longueur d'au moins

$$l = 3\ b\ tan(90° - \varphi/2),$$

mesurée suivant la ligne de base, où b est la dimension intérieure de la largeur moyenne ou de la diagonale du guide de lumière dans une section transversale, perpendiculaire à la ligne de base, et φ est l'angle d'ouverture moyen de la distribution de la luminosité des DEL entre les valeurs de la moitié de la luminosité maximale.

2. Guide de lumière de DEL selon la revendication 1, dans lequel les reliefs (12, 12', 12") et/ou creux s'étendent depuis la circonférence du côté d'entrée de lumière (4) en continu jusqu'à la circonférence du côté de sortie de lumière (6).

3. Guide de lumière de DEL selon l'une quelconque des revendications précédentes, dans lequel les reliefs (12, 12', 12") et/ou creux présentent une section transversale constante dans les plans perpendiculaires à la ligne de base.

4. Guide de lumière de DEL selon l'une quelconque des revendications précédentes, dans lequel le guide de lumière (2) présente une section transversale constante dans les plans perpendiculaires à la ligne de base.

5. Guide de lumière de DEL selon l'une quelconque des revendications précédentes, dans lequel les reliefs (12, 12', 12") et/ou creux sont en forme de V ou de U dans une section transversale perpendiculaire à la ligne de base.

6. Guide de lumière de DEL selon l'une quelconque des revendications précédentes, dans lequel les plusieurs DEL (8) sont disposées du côté entrée de lumière (4) sur une rangée côte à côte ou dans une matrice rectangulaire, et le guide de lumière définit un côté fond (22, 22') et un côté sommet (20, 20'), qui s'étendent substantiellement en parallèle à la rangée de DEL ou au plus grand côté de la matrice de DEL rectangulaire.

7. Guide de lumière de DEL selon la revendication 6, dans lequel un relief (12) ou un multiple entier de reliefs (12') est associé dans l'espace du côté fond et/ou du côté sommet du guide de lumière de chaque DEL sur la rangée de DEL ou sur le plus grand côté de la matrice de DEL rectangulaire.

8. Guide de lumière de DEL selon l'une quelconque des revendications précédentes, dans lequel un ou plusieurs des reliefs (12, 12', 12") présente(nt) une crête tournée, au niveau de la circonférence du côté d'entrée de lumière, respectivement vers une DEL.

9. Guide de lumière de DEL selon l'une quelconque des revendications précédentes, dans lequel un ou plusieurs des reliefs est ou sont formé(s) respectivement à partir de deux flancs plans (14 ; 16) enfermant dans une crête du relief un angle entre 90° et 165°, de préférence entre 110° et 160°, en particulier un angle d'environ 120°.

10. Guide de lumière de DEL selon l'une quelconque des revendications précédentes, dans lequel le guide de lumière (2) est un guide de lumière creux.

11. Guide de lumière de DEL selon l'une quelconque des revendications précédentes, dans lequel la ligne de base s'étend en partie ou en totalité de façon rectiligne.

12. Guide de lumière de DEL selon l'une quelconque des revendications précédentes, dans lequel la ligne de base s'étend en partie de façon courbe, en particulier selon une courbure entre 5° et 180°, de préférence avec une courbure de 30°, 60°, 90°, 120°, 150° ou 180°.

13. Guide de lumière de DEL selon l'une quelconque des revendications précédentes, dans lequel le guide de lumière se compose de plusieurs modules et chaque module comprend une portion de la ligne de base.

14. Guide de lumière de DEL selon la revendication 13, dans lequel les modules peuvent être juxtaposés par un assemblage par emboîtement ou enclenchement.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- WO 0123804 A
- WO 0058664 A
- WO 2007016282 A
- EP 1693615 A1